# EUROPÄISCHE PATENTANMELDUNG

(11) **EP 4 803 446 A1**
(43) Veröffentlichungstag der Anmeldung: **09.09.2026**
(21) Anmeldenummer: 26162319.3
(22) Anmeldetag: 04.03.2026
(51) Int. Cl.: B65G 1/14

(54) **STAPELSÄULE ZUR AUFNAHME VON LAGERTEILEN**

(30) Priorität: 05.03.2025 DE 102025108266
(71) Anmelder: MTS Maschinenbau GmbH, 88512 Mengen (DE)
(72) Erfinder: Laible, Dr. Eckhard, 71144 Leinfelden-Schlechtenmühle (DE)
(74) Vertreter: Patentanwälte und Rechtsanwalt Weiß, Arat & Partner mbB

(57) **Zusammenfassung**

Die Erfindung betrifft eine Stapelsäule zur Aufnahme von mindestens zwei Lagerteilen auf einer einzigen Stapelklinke (1), wobei ein Grundkörper (2) aus zwei Seitenwangen (3, 4) besteht, die über eine Rückwand (5) miteinander verbunden sind, wobei die beiden Seitenwangen (3, 4) mit der Rückwand (5) eine Rinnenform ausbilden, wobei zwischen den beiden Seitenwangen (3, 4) in der Rinnenform die Stapelklinken (1) übereinander schwenkbar angeordnet sind, wobei den Stapelklinken (1) jeweils einen Achsbolzen (6) und einen Gestängebolzen (7) zugeordnet ist, wobei der Gestängebolzen (7) innerhalb zweier Bogen-Langlöcher (8.1, 8.2) beweglich geführt ist, wobei die Bogen-Langlöcher (8.1, 8.2) jeweils in eine der Seitenwangen (3, 4) eingelassen sind, und der Achsbolzen (6) zwischen den beiden Seitenwangen (3, 4) und in Bohrungen (9.1, 9.2) der Seitenwangen (3, 4) drehbar gelagert ist, wobei um den Achsbolzen (6) eine Rückstellfeder (10) angeordnet ist, deren erstes Federbein (11.1) gegen die Rückwand drückt (5) und deren zweites Federbein (11.2) den Gestängebolzen (7) zu einer Ruhestellung hindrückend angeordnet ist, wobei eine Radialfeder (12) den Gestängebolzen (7) und den Achsbolzen (6) verbindet und den Gestängebolzen (7) zu dem Achsbolzen (6) ziehend angeordnet ist und dabei den Gestängebolzen (7) an eine zu dem Achsbolzen (6) weisende Innenkontur (13) der Bogen-Langlöcher (8.1, 8.2) zieht, wobei die Innenkontur (13) zwischen einer Ruhestellung und einer Arbeitsstellung einen von dem Achsbolzen (6) wegragenden Verlaufsunterbrechung (16) ausbildet.

## Beschreibung

### Technisches Gebiet

Die Erfindung betrifft eine Stapelsäule zur Aufnahme von Lagerteilen nach dem Oberbegriff des Anspruchs 1.

### Stand der Technik

Derartige Stapelsäulen bzw. in ihnen integrierte Klinken sind beispielsweise aus der DE 38 11 310 C2 bekannt. Meist handelt es sich um senkrechte Stapelsäulen, die in einem Viereck angeordnet sind. Aus technischen Gründen kann es sich aber auch als ratsam erweisen, diese Stapelsäulen schräg anzuordnen, wie dies in der DE 41 33 464 A1 gezeigt ist. Ferner besteht auch die Möglichkeit der horizontalen Anordnung der Stapelsäule beispielsweise nach der DE 40 20 864 A1.

Bei all diesen Stapelsäulen ruht das Lagergut in oder an Tragarmen von Klinkenhebeln, wobei die Gefahr besteht, dass das Lagergut verschoben wird. Insbesondere wenn die Stapelsäulen transportierbar ausgebildet sind, wirkt sich dieser Nachteil erheblich ungünstig aus. Durch das Verschieben auf den Tragarmen kann es zudem zu Beschädigungen des Lagerguts kommen. Deshalb wird versucht, das Lagergut auf den Stapelsäulen zusätzlich zu sichern. Gemäss der DE 196 47 578 A1 kann dies dadurch geschehen, dass zwischen zwei benachbarten Klinkenhebeln eine Zwischenklinke vorgesehen wird, welche nach einem Auf- oder Anlegen des Lagerguts auf oder an dem einen Klinkenhebel durch die Schwenkbewegung eines anderen Klinkenhebels auf oder an das Lagergut andererseits des einen Klinkenhebels auf- oder anlegbar ist.

Ferner ist bei vielen Stapelsäulen vorgesehen, dass die aufeinanderfolgenden Kliniken über ein Gestänge miteinander verbunden sind, sodass ihre Bewegung voneinander abhängig ist. In Arbeitsstellung werden diese Klinken dann nur durch das Gestänge bzw. das Lagergut gehalten.

### Aufgabe der Erfindung

Die Aufgabe der vorliegenden Erfindung ist es, eine Stapelsäule zur Aufnahme von Lagergütern zur Verfügung zu stellen, bei der auf einer einzelnen Stapelklinke mehr als ein Lagergut und das in einem auch möglicherweise mehrstufigen also nacheinander erfolgenden Beladen zu ermöglichen, ohne dass die Stapelklinke schon beim ersten Lagergut aus der Bereitschaftsstellung zum Beladen der Stapelklinke in die Arbeitsstellung als Hinweis auf ein vollständiges Beladen schwenkt, sondern in der Bereitschaftsstellung verbleibt, bis eine definierte Anzahl von Lagergütern auf die Stapelklinke drückt.

### Lösung der Aufgabe

Zur Lösung der Aufgabe führen die Merkmale nach dem Anspruch 1.

Vorteilhafte Ausgestaltungen sind in den Unteransprüchen beschrieben.

Die erfindungsgemäße Stapelsäule zur Aufnahme von Lagergütern auf einer einzigen Stapelklinke ist so konstruiert, dass die Stapelklinke aus einer Ruhestellung in eine Bereitschaftsstellung überführt wird. Um Lagergüter übereinander oder nebeneinander in definierten Abständen auf einer Stapelklinke zu platzieren, werden mehrere Stapelklinken verwendet, die entweder übereinander oder nebeneinander angeordnet sind. Diese Stapelklinken sind innerhalb der Rinnenform zwischen den beiden Seitenwangen schwenkbar gelagert.

Die Stapelklinken sind über ein Gestänge miteinander verbunden, das am Gestängebolzen angreift. Das Gestänge sorgt dafür, dass die Bewegung einer Stapelklinke gesteuert wird: Sobald eine Stapelklinke die Arbeitsstellung erreicht, also beladen ist, wird die benachbarte Stapelklinke aus der Ruhestellung in die Bereitschaftsstellung versetzt. Die Bereitschaftsstellung kennzeichnet den Zustand, in dem die Stapelklinke für das nächste Lagergut bereit ist.

Die Bewegung der Stapelklinken erfolgt über das Gestänge, das ihre Position zwischen Ruhestellung, Bereitschaftsstellung und Arbeitsstellung steuert. Das Gestänge ist dabei mit dem Gestängebolzen verbunden. Die erste bzw. unterste Stapelklinke stellt eine Ausnahme dar, da sie sich in der Regel nicht in einer Ruhestellung befindet, sondern nur zwischen der Bereitschaftsstellung und der Arbeitsstellung wechselt. Sie ist direkt an der Fußplatte angeordnet und bleibt stets in einer dieser beiden Positionen. In den Fällen, wenn keine Fußplatte vorhanden ist, handelt es sich bei der besprochenen ersten Stapelklinke um die zuerst zu beladende Klinke.

Bisher war es üblich, dass Lagergüter nur in einem einzigen Ladevorgang auf eine Stapelklinke abgelegt wurden. Eine mehrstufige Beladung, bei der mehrere Lagergüter nacheinander auf eine einzige Stapelklinke platziert werden, war nicht möglich. Dies entsprach jedoch nicht der effizientesten Vorgehensweise, da Lagergüter in der Praxis oft nacheinander produziert oder aus einer Herstellungsmaschine entnommen und dann abgelegt werden.

Die erfindungsgemäße Stapelsäule ermöglicht nun einen mehrstufigen Beladungsprozess. Dadurch können in der Regel eine vorher festgelegte Anzahl von identischen Lagergütern auf einer einzigen Stapelklinke abgelegt werden. Zusätzlich ist es auch beispielsweise möglich, auch unterschiedliche Lagergüter, auf einer einzigen Stapelklinke abgelegt werden.

Die Stapelsäule besteht aus einem Grundkörper mit zwei Seitenwangen, die über eine Rückwand verbunden sind. Die Stapelklinken sind zwischen den beiden Seitenwangen drehbar an einem Achsbolzen gelagert. Diese Seitenwangen bilden mit der Rückwand eine Rinnenform, die optional eine Fußplatte umfassen kann. Die Fußplatte kann auf einem Untergrund befestigt sein, beispielsweise auf dem Boden einer Werkshalle, einem Lagerwagen oder einer Palette.

Jede Stapelklinke besitzt einen Gestängebolzen, der innerhalb eines geraden oder gebogenen Langlochs in der Seitenwange beweglich ist. Dadurch wird die Stapelklinke mobilisiert und erhält gleichzeitig ihren Anknüpfungspunkt für das Gestänge, das die Bewegung zwischen Bereitschafts- und Arbeitsstellung steuert. In der beschriebenen Ausführungsform wird der Gestängebolzen innerhalb zweier Bogen-Langlöcher geführt, die jeweils in die Seitenwangen eingelassen sind. Der Achsbolzen wiederum ist zwischen den Seitenwangen gelagert und dreht sich innerhalb entsprechender Bohrungen.

Zur Rückstellung der Stapelklinke ist eine Rückstellfeder um den Achsbolzen angeordnet. Ihr erstes Federbein drückt gegen die Rückwand, während ihr zweites Federbein den Gestängebolzen in die Ruhestellung zurückführt. Das bedeutet, dass die Rückstellfeder ihre Kraft nutzt, um die Stapelklinke in die Ruhestellung zu drücken, während das Gewicht des Lagerguts eine entgegengesetzte Kraft auf die Stapelklinke ausübt.

Zusätzlich zu einem Gestängebolzen besitzt jede Stapelklinke auch einen Achsbolzen. Diese Bolzen sind nicht Teil der Stapelklinke selbst, sondern dienen ihrer Funktionsweise.

Eine wesentliche Neuerung der Erfindung ist die Verwendung einer Radialfeder, die den Gestängebolzen mit dem Achsbolzen verbindet. Diese Radialfeder zieht den Gestängebolzen in Richtung des Achsbolzens und sorgt gleichzeitig dafür, dass der Gestängebolzen ständig an die Innenkontur der Bogen-Langlöcher gedrückt wird. Dies ermöglicht eine kontrollierte Bewegung des Gestängebolzens und damit auch der Stapelklinke. Entscheidend für die Funktion ist, dass die Innenkontur zwischen der Ruhestellung und der Arbeitsstellung des Gestängebolzens eine Verlaufsunterbrechung aufweist. Eine mögliche Ausführung der Verlaufsunterbrechung kann eine Überwindungswulst sein, die als Erhebung von dem Achsbolzen wegsteht. Es kann sich aber auch um eine Stufe handeln, die den Verlauf der Innenkontur in zwei Abschnitte einteilt. Einen ersten Abschnitt weg von der Ruhestellung zu der Verlaufsunterbrechung und einen zweiten Abschnitt von der Verlaufsunterbrechung zur Arbeitslage. Dabei verläuft beispielsweise der erste Abschnitt näher an dem Achsbolzen und der zweite Abschnitt ansteigt und weiter weg von dem Achsbolzen verläuft. Zusätzlich kann es sich auch um eine Ausnehmung oder Ausnehmungstasche handeln, in die der Gestängebolzen zu dem Achsbolzen hin einfährt und nach Überwindung der Verlaufsunterbrechung wieder herausfährt. Auch Mischformen hiervon sind möglich.

Diese Verlaufsunterbrechung unterbricht den bogenförmigen Verlauf der Innenkontur und ermöglicht eine mehrstufige Beladung der Stapelklinke. In Kombination mit der Radialfeder, die den Gestängebolzen stets an die Innenkontur drückt, fungiert die Verlaufsunterbrechung als zu überwindendes Hindernis. Die Überwindung dieses Hindernisses erfolgt, sobald eine definierte Last auf die Stapelklinke wirkt. Es ist aber auch definitonsgemäß eine Verlaufsunterbrechung gegeben, wenn zwischen der Ruhestellung und der Arbeitsstellung eine zu dem Achsbolzen hin gezogene Ausnehmungstasche vorhanden ist, in der der Gestängebolzen in der Bereitschaftsstellung einfährt, kurz verhofft und nach der ausreichenden Beladung der Stapelklinke in die Arbeitsstellung weiterfährt.

Der mehrstufige Beladungsprozess entsteht dadurch, dass das Hindernis der Verlaufsunterbrechung erst dann überschritten wird, wenn das zuvor festgelegte Gewicht der Lagergüter erreicht ist. Erst wenn die auf die Stapelklinke ausgeübte Kraft die definierte Kraft der Radialfeder übersteigt, gleitet der Gestängebolzen über die Verlaufsunterbrechung hinweg und wechselt von der Bereitschaftsstellung in die Arbeitsstellung. Gleichzeitig wird die nächste Stapelklinke aus der Ruhestellung in die Bereitschaftsstellung versetzt.

Die Verlaufsunterbrechung ist innerhalb der Innenkontur zwischen einer Ruhestellungs-Ausnehmung und einer Arbeitsstellungs-Ausnehmung angeordnet.

In einer alternativen Ausführungsform kann das zweite Federbein der Rückstellfeder zwischen den Gestängebolzen und die Stapelklinke hineinragen.

Dieser Verlauf entspricht dem typischen Muster des Bogen-Langlochs und damit auch der Innenkontur. Allerdings wird er durch die Verlaufsunterbrechung unterbrochen, die einen größeren Radialabstand zur Bohrung des Achsbolzens aufweist. Abgesehen von der Verlaufsunterbrechung kann die Innenkontur einen Grund-Radialabstand von 15 mm bis 85 mm haben. Dies ermöglicht es der auslegenden Person, je nach Abstand festzulegen, wie viel Gewicht erforderlich ist, damit der Gestängebolzen über die Verlaufsunterbrechung hinweggeführt wird. Ein größerer Abstand erfordert eine größere Kraft und damit ein höheres Gewicht der Lagergüter.

Zusätzlich lässt sich die benötigte Kraft zur Überwindung der Verlaufsunterbrechung durch den Einsatz mehrerer Radialfedern anpassen. Es kann eine weitere Radialfeder vorhanden sein, die gemeinsam mit der ersten Radialfeder die Rückstellfeder an den Enden des Achsbolzens flankiert. Dadurch wird eine gleichmäßige Kraftverteilung sichergestellt und langfristige einseitige Belastungen des Achsbolzens oder des Gestängebolzens vermieden.

Darüber hinaus können an der Innenkontur zusätzlich zu einer Verlaufsunterbrechung auch weitere Verlaufsunterbrechungen ausgebildet sein. Dies gibt der auslegenden Person die Möglichkeit, mehrstufige Beladungsprozesse gezielt zu berechnen und zu steuern.

Ein mögliches Ausführungsbeispiel einer erfindungsgemäßen Stapelklinke besteht aus einem Lagerarm und einer Führungsaufnahme. Die Führungsaufnahme setzt sich aus einem Bodenbereich und zwei rechtwinklig angeordneten Flügeln zusammen, die jeweils zwei Achsbolzen-Bohrungen und zwei Führungsbolzen-Langlöcher aufweisen. Zudem sind zwei Führungsbolzen-Langlöcher parallel zu einem Knick des Bodenbereichs ausgebildet, der zu den Flügeln überleitet. Der Lagerarm kann außerdem mit einer zusätzlichen Kunststoff-Beschichtung versehen sein.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: zeigt eine Stapelsäule (S) perspektivisch aus einer ersten Perspektive von schräg oben;
- Figur 2: zeigt die Stapelsäle (S) aus der Figur 1 aus einer zweiten Perspektive von schräg oben;
- Figur 3: zeigt eine Teilansicht der Stapelsäule (S) aus einer ersten Perspektive;
- Figur 4: zeigt die Teilansicht der Figur 3 aus einer zweiten Perspektive;
- Figur 5: zeigt eine bloße Seitenansicht einer der der Seitenwange ohne weitere Bauteile;
- Figur6: zeigt die Ansicht aus der Figur 5 mit weiteren Bauteilen in einer Ruhestellung der Stapelklinke (S);
- Figur 7: zeigt die Ansicht aus der Figur 5 mit weiteren Bauteilen in einer Bereitschaftsstellung der Stapelklinke;
- Figur 8: zeigt die Ansicht aus der Figur 5 mit weiteren Bauteilen in einer Arbeitsstellung der Stapelklinke;

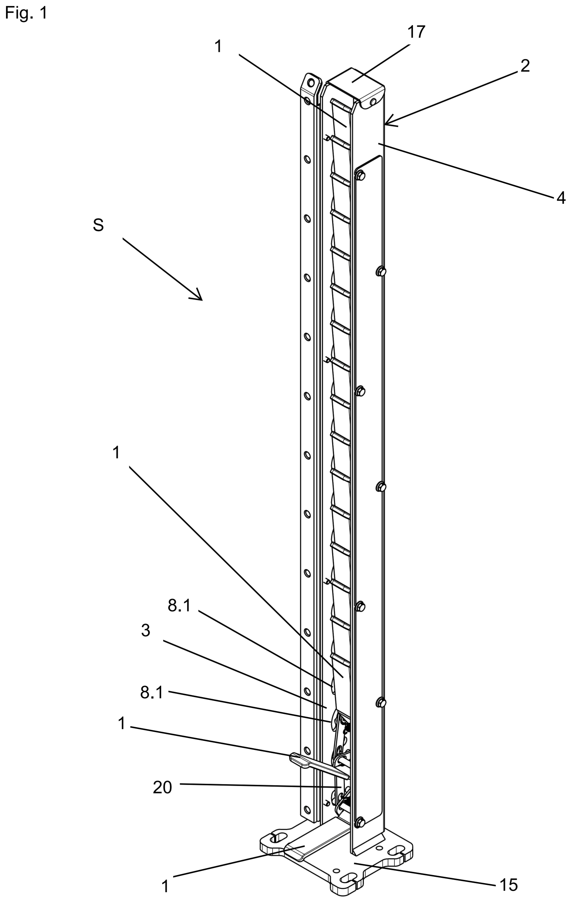

Die Figur 1 zeigt eine Stapelsäule S perspektivisch aus einer ersten Perspektive von schräg oben. Die Stapelsäule S dient der Aufnahme von Lagerteilen auf einer Stapelklinke 1. Die Stapelsäule S besteht in erster Linie aus einem Grundkörper 2, der wiederum aus einer ersten Seitenwange 3 und einer zweiten Seitenwange 4 besteht. Einends weist der Grundkörper 2 eine Bodenplatte 15 auf. Andernends wird der Grundkörper 2 mit einer Deckelplatte 17 abgeschlossen. Der Grundkörper 2 bildet eine Rinnenform, in welcher mehrere Stapelklinken 1 übereinander angeordnet sind. Die erste Stapelklinke 1 nahe der Bodenplatte 15 befindet sich in der Arbeitsstellung. Die darüber in Richtung Deckelplatte 17 befindliche Stapelklinke 1 befindet sich in der Bereitschaftsstellung. Die übrigen Stapelklinken 1 befinden sich in der Ruhestellung. Da in der ersten Perspektive die Innenseite der ersten Seitenwange 3 teilweise gezeigt ist, ist dort ein Gestänge 20 und die ersten Bogen-Langlöcher 8.1 erkennbar. Die ersten Bogen-Langlöcher 8.1 sind als Ausnehmungen in die erste Seitenwange 3 eingelassen.

Das Gestänge 20 wirkverbindet die in dem Grundkörper 20 angeordneten Stapelklinken 1 in der Weise, dass immer bei der Bewegung der einen ersten Stapelklinke 1 die benachbarte zweite Stapelklinke 1 in Aktion versetzt wird. Dies geschieht eben in der Abfolge Ruhestellung zu Bereitschaftsstellung zu Arbeitsstellung und zurück. Einzige Ausnahme hiervon ist die der Bodenplatte 15 nächste Stapelklinke 1 die sich in der Ausgangslage nicht in der Ruhestellung, sondern schon in der Bereitschaftsstellung befindet und auch nur in diese Bereitschaftsstellung zurückkehrt.

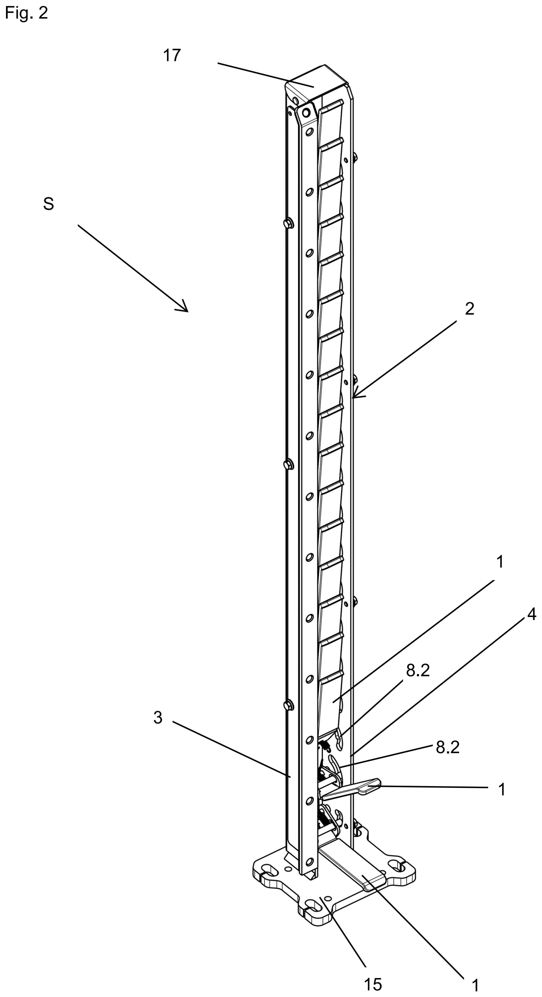

Figur 2 zeigt die Stapelsäle S aus der Figur 1 aus einer zweiten Perspektive von schräg oben. Die zur Figur 1 gemachten Ausführungen gelten auch für diese Figur 2. Aus dieser Perspektive ist die Innenseite des Grundkörpers 2 teilweise zu erkennen. Folglich sind auch zweite Bogen-Langlöcher 8.2 zu erkennen, die in die zweite Seitenwange 4 als Ausnehmungen eingelassen sind.

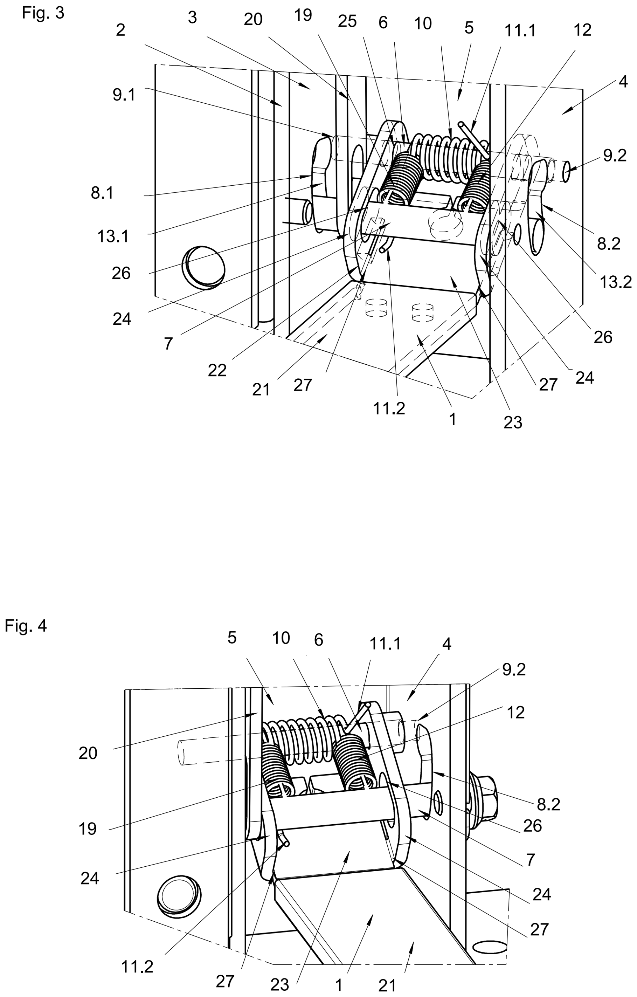

Die Figur 3 zeigt eine perspektivische Teilansicht der erfindungsgemäßen Stapelsäule S. Bei der in der Figur 3 gezeigten Stapelklinke 1 handelt es sich um die der Bodenplatte 15 nächste Stapelklinke 1.

Die Stapelklinke 1 ist innerhalb der Rinnenform des Grundkörpers 2 angeordnet. Der Grundkörper 2 besteht in erster Linie aus den zwei Seitenwangen 3, 4, die über eine Rückwand 5 miteinander verbunden sind. Weitere nicht gezeigte Stapelklinken 1 sind ebenfalls zwischen den beiden Seitenwangen 3, 4 in der Rinnenform übereinander oder nebeneinander schwenkbar angeordnet sind.

Der Stapelklinke 1 ist ein Achsbolzen 6 und einen Gestängebolzen 7 zugeordnet.

Der Gestängebolzen 7 ist innerhalb der zwei Bogen-Langlöcher 8.1, 8.2 beweglich geführt. Dabei sind die Bogen-Langlöcher 8.1, 8.2 jeweils in eine der Seitenwangen 3, 4 eingelassen. Im Einzelnen ist hier das erste Bogen-Langloch 8.1 in die erste Seitenwange 3 eingelassen. Das zweite Bogen-Langloch 8.2 ist in die zweite Seitenwange 4 eingelassen.

Der Achsbolzen 6 ist zwischen den beiden Seitenwangen 3, 4 angeordnet und in Bohrungen 9.1, 9.2 der Seitenwangen 3, 4 drehbar gelagert. Die erste Bohrung 9.1 ist dabei in die erste Seitenwange 3 und die zweite Bohrung 9.2 ist in die zweite Seitenwange 4 eingelassen.

Um den Achsbolzen 6 ist eine Rückstellfeder 10 angeordnet. Ein erstes Federbein 11.1 drückt gegen die Rückwand 5. Ein zweites Federbein 11.2 ist in der Form angeordnet, dass es den Gestängebolzen 7 zu einer Ruhestellung hindrückt.

Weiter sind Radialfedern 12, 19 gezeigt, die den Gestängebolzen 7 und den Achsbolzen 6 verbinden.

Die Radialfeder 12 und die weitere Radialfeder 19 sind so angeordnet, dass sie den Gestängebolzen 7 zu dem Achsbolzen 6 hin ziehen. In dem hier gezeigten Ausführungsbeispiel ist die Radialfeder 12 und die weitere Radialfeder 19 so angeordnet, dass sie die Rückstellfeder 10 an dem Achsbolzen 6 jeweils endseitig flankieren.

Dabei ziehen die gezeigten Radialfedern 12 den Gestängebolzen 7 an eine zu dem Achsbolzen 6 weisende Innenkontur 13.1, 13.2 der Bogen-Langlöcher 8.1, 8.2. Im Einzelnen ist die erste Innenkontur 13.1 Teil des ersten Bogen-Langlochs 8.1 und die zweite Innenkontur 13.2 Teil des zweiten Bogen-Langlochs 8.2.

Die hier gemachten Ausführungen gelten auch für die übrigen in der Stapelsäule S befindlichen Stapelklinken 1, wobei die übrigen Stapelklinke 1 in Bogen-Langlöchern 8.1, 8.2 bewegt werden, die eine Verlaufsunterbrechung 16 aufweisen.

In den Figuren drei bis sechs ist deutlich zu erkennen, dass die Innenkontur 13.1, 13.2 zwischen der Ruhestellung und der Arbeitsstellung der Stapelklinke 1 verläuft. Dabei bildet sie die Verlaufsunterbrechung 16 in Form eines Überwindungswulstes aus, der von dem Achsbolzen 6 sowie den Bohrungen 9.1, 9.2, in die der Achsbolzen 6 greift, wegragt. Die Verlaufsunterbrechung 16 bildet im Verlauf der Stapelklinke 1 von der Ruhestellung in die Arbeitsstellung einen Widerstand, der ein mehrstufiges Beladen der Stapelklinke 1 in der Bereitschaftsstellung ermöglicht.

Die Verlaufsunterbrechung 16 der Innenkontur 13 ist in einem anderen nicht gezeigten Ausführungsbeispiel zwischen einer Ruhestellungs-Ausnehmung der Ruhestellung der Stapelklinke 1 und einer Arbeitsstellungs-Ausnehmung der Arbeitsstellung der Stapelklinke 1 angeordnet. Die Ruhestellungs-Ausnehmung und die Arbeitsstellungs-Ausnehmung stellen sich als in das jeweilige Bogen-Langloch 8.1, 8.2 endseits eingelassene in Richtung der Bohrungen 9.1, 9.2 ragende Taschen dar, die ein ungewolltes Herausgleiten des Gestängebolzens 7 erschweren sollen.

In den Figuren 3 und 4 ist gut zu erkennen, dass das zweite Federbein 11.2 zwischen den Gestängebolzen 7 und die Stapelklinke 1 hineinragt. Weiter ist gut zu erkennen, dass die übereinander oder nebeneinander angeordneten Stapelklinken 1 miteinander an dem Gestängebolzen 7 angreifend über ein Gestänge 20 miteinander wirkverbunden sind.

Die Stapelklinke 1 wiederum besteht aus einem Lagerarm 21 und einer Führungsaufnahme 22. Die Führungsaufnahme 22 besteht dabei im Einzelnen aus einem Bodenbereich 23 und zwei rechtwinklig angeordneten Flügeln 24, wobei die Flügel 24 zwei Achsbolzen-Bohrungen 25 und zwei Führungsbolzen-Langlöcher 26 aufweisen.

Die beiden Führungsbolzen-Langlöcher 26 verlaufen parallel zu einem Knick 27, der den Bodenbereich 23 mit den Flügeln 24 verbindet. Diese Anordnung sorgt für eine präzise Führung und Stabilität der beweglichen Komponenten.

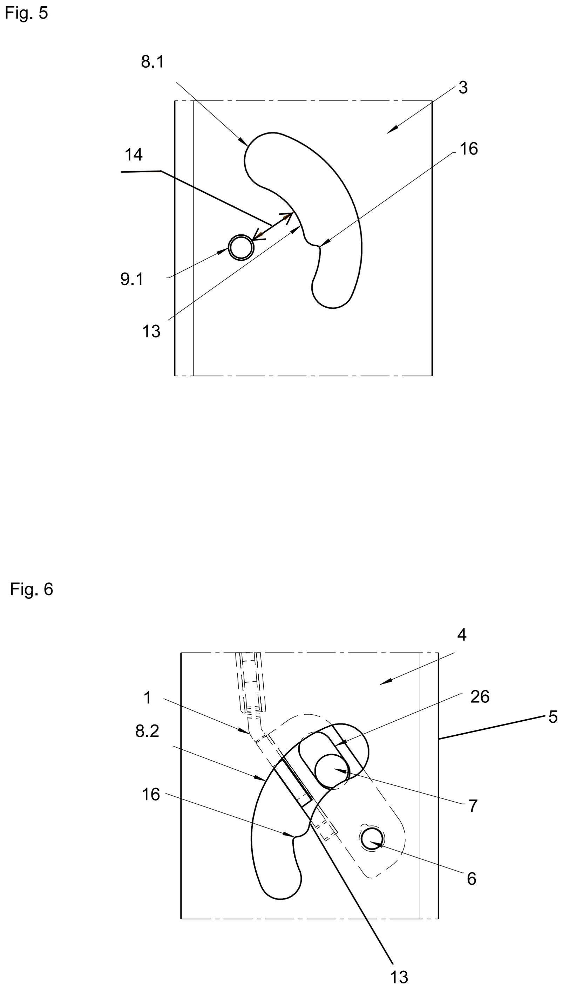

In der Figur 5 ist ausserdem gezeigt, wie sich ein Radialabstand 14 ergibt. Dabei weist die Innenkontur 13 einen im Wesentlichen bogenförmigen Radialabstand 14 von 15 mm bis 85 mm zu den Bohrungen 9.1, 9.2 des Achsbolzens 6 auf. Die Innenkontur 13 des Bogen-Langlochs 8.1 hat einen überwiegend bogenförmigen Abstand von 15 mm bis 85 mm zu der Bohrung 9.1 des Achsbolzens 6. Der bogenförmige Verlauf beginnt, ausgehend von der Bohrung 6 in der Seitenwand 3, in die der Achsbolzen 6 eingreift, kurz nach der 12-Uhr-Position und endet zwischen der 16:00-Uhr und 17:30-Uhr-Position in Bezug auf diese Bohrung 9.1. Gleiches gilt natürlich auch für die gegenüberliegende Seitenwand 4 und das dortigen Bogen-Langloch 8.2 und die Bohrung 9.2.

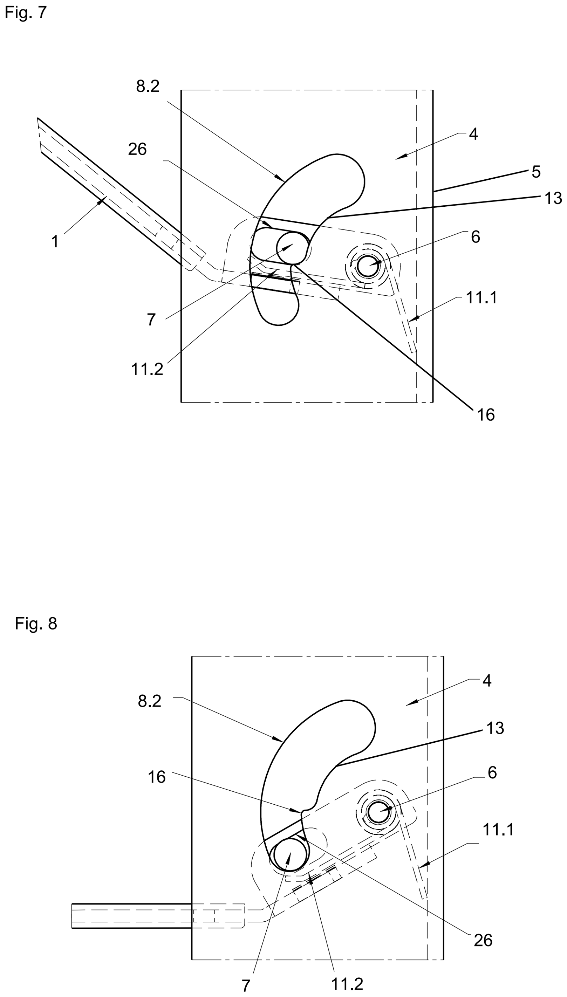

Die Figur 6 zeigt die Stapelklinke 1 in Ruhestellung. Dabei befindet sich der Gestängebolzen 7 nahe der Rückwand 5 und gleitet gegen den Uhrzeigersinn in dem Bogen-Langloch 8.2 hin zur Bereitschaftsstellung, die in der Figur 7 gezeigt ist. Dort wird der Lauf des Gestängebolzens 7 an der Innenkontur 13 in definierter Form aufgehalten. Sobald die Stapelklinke 1 den vorgaben entsprechend beladen wurde, überwindet der Gestängebolzen 7 gegen die Kraft der Radialfedern 12, 19 die Verlaufsunterbrechung 16 und gleitet in die Arbeitsstellung, wie sie in der Figur 8 gezeigt ist.

### Bezugszeichenliste

| | |
|---|---|
| 1 | Stapelklinke |
| 2 | Grundkörper |
| 3 | Erste Seitenwange |
| 4 | Zweite Seitenwange |
| 5 | Rückwand |
| 6 | Achsbolzen |
| 7 | Gestängebolzen |
| 8.1, 8.2 | Bogen-Langloch |
| 9.1, 9.2 | Bohrung |
| 10 | Rückstellfeder |
| 11 | Erstes Federbein |
| 12 | Radialfeder |
| 13.1. 13.2 | Innenkontur |
| 14 | Radialabstand |
| 15 | Bodenplatte |
| 16 | Verlaufsunterbrechung |
| 17 | Deckelplatte |
| | |
| 19 | weitere Radialfeder |
| 20 | Gestänge |
| 21 | Lagerarm |
| 22 | Führungsaufnahme |
| 23 | Bodenbereich |
| 24 | Flügel |
| 25 | Achsbolzen-Bohrung |
| 26 | Führungsbolzen-Langloch |
| 27 | Knick |
| 28 | |
| 29 | |
| 30 | |
| 31 | |
| 32 | |
| 33 | |

## Patentansprüche

1. Stapelsäule zur Aufnahme von Lagerteilen auf einer Stapelklinke (1),
- wobei ein Grundkörper (2) aus zwei Seitenwangen (3, 4) besteht, die über eine Rückwand (5) miteinander verbunden sind,
- wobei die beiden Seitenwangen (3, 4) mit der Rückwand (5) eine Rinnenform ausbilden,
- wobei zwischen den beiden Seitenwangen (3, 4) in der Rinnenform die Stapelklinken (1) übereinander schwenkbar angeordnet sind,
- wobei den Stapelklinken (1) jeweils einen Achsbolzen (6) und einen Gestängebolzen (7) zugeordnet ist,
- wobei der Gestängebolzen (7) innerhalb zweier Bogen-Langlöcher (8.1, 8.2) beweglich geführt ist,
- wobei die Bogen-Langlöcher (8.1, 8.2) jeweils in eine der Seitenwangen (3, 4) eingelassen sind,
- und der Achsbolzen (6) zwischen den beiden Seitenwangen (3, 4) und in Bohrungen (9.1, 9.2) der Seitenwange (3, 4) drehbar gelagert ist,
- wobei um den Achsbolzen (6) eine Rückstellfeder (10) angeordnet ist, deren erstes Federbein (11.1) gegen die Rückwand drückt (5) und deren zweites Federbein (11.2) den Gestängebolzen (7) zu einer Ruhestellung hindrückend angeordnet ist,
**dadurch gekennzeichnet, dass**
- eine Radialfeder (12) den Gestängebolzen (7) und den Achsbolzen (6) verbindet und
- den Gestängebolzen (7) zu dem Achsbolzen (6) ziehend angeordnet ist und dabei den Gestängebolzen (7) an eine zu dem Achsbolzen (6) weisende Innenkontur (13) der Bogen-Langlöcher (8.1, 8.2) zieht,
- wobei die Innenkontur (13) zwischen der Ruhestellung der Stapelklinke (1) und einer Arbeitsstellung der Stapelklinke (1) eine Verlaufsunterbrechung (16) ausbildet.

2. Stapelsäule nach Anspruch 1, **dadurch gekennzeichnet, dass** die Verlaufsunterbrechung (16) eine von dem Achsbolzen (6) zumindest teilweise wegragende Überwindungswulst ausbildet.

3. Stapelsäule nach Anspruch 1 oder 2, **dadurch gekennzeichnet, dass** die Überwindungswulst (16) der Innenkontur (13) zwischen einer Ruhestellungs-Ausnehmung der Ruhestellung und eine Arbeitsstellungs-Ausnehmung der Arbeitsstellung aufweist.

4. Stapelsäule nach einem der vorigen Ansprüche, **dadurch gekennzeichnet, dass** das zweite Federbein (11.2) zwischen den Gestängebolzen (7) und die Stapelklinke (1) hineinragt.

5. Stapelsäule nach einem der vorigen Ansprüche, **dadurch gekennzeichnet, dass** die Innenkontur (13) einen im Wesentlichen bogenförmigen Abstand von 15 mm bis 85 mm zu den Bohrungen (9.1, 9.2) des Achsbolzens (6) aufweist.

6. Stapelsäule nach einem der vorigen Ansprüche, **dadurch gekennzeichnet, dass** eine weitere Radialfeder (19) vorhanden ist, wobei die Radialfeder (12) und die weitere Radialfeder (19) die Rückstellfeder (10) an dem Achsbolzen (6) jeweils endseitig flankieren.

7. Stapelsäule nach einem der vorigen Ansprüche, **dadurch gekennzeichnet, dass** die Innenkontur (13) weitere Überwindungswulste ausbildet.

8. Stapelsäule nach einem der vorigen Ansprüche, dass die Stapelklinken (1) miteinander an dem Gestängebolzen (7) angreifend über ein Gestänge (20) miteinander wirkverbunden sind.

9. Stapelsäule nach einem der vorigen Ansprüche, **dadurch gekennzeichnet, dass** aus einem Lagerarm (21) und einer Führungsaufnahme (22) besteht, wobei die Führungsaufnahme (22) aus einem Bodenbereich (23) und zwei rechtwinklig angeordneten Flügeln (24) besteht, wobei die Flügel (24) zwei Achsbolzen-Bohrungen (25) und zwei Führungsbolzen-Langlöcher (26) aufweist.

10. Stapelsäule nach Anspruch 9, **dadurch gekennzeichnet, dass** die zwei Führungsbolzen-Langlöcher (26) parallel zu einem Knick (27) des Bodenbereichs (23) zu den Flügeln (24) ausgebildet sind.

11. Stapelsäule nach einem der vorigen Ansprüche, **dadurch gekennzeichnet, dass** der Lagerarm (21) eine Kunststoff-Beschichtung aufweist.
